(19)

Europäisches
Patentamt
European
Patent Office
Office européen
des brevets

(11)  **EP 2 897 088 A1**

(12)  **EUROPEAN PATENT APPLICATION**

(43) Date of publication:
**22.07.2015 Bulletin 2015/30**

(21) Application number: **14151383.8**

(22) Date of filing: **16.01.2014**

(51) Int Cl.:
*G06Q 10/06* (2012.01)    *G06Q 50/26* (2012.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fundació Privada Barcelona Digital
Centre Tecnologic
08018 Barcelona (ES)**

(72) Inventor: **Villatoro Segura, Daniel
08031 Barcelona (ES)**

(74) Representative: **Mohammadian, Dario
Bardehle Pagenberg
Avenida Diagonal 420 1-1
08037 Barcelona (ES)**

(54) **Method and apparatus for optimum spatial clustering**

(57)    The invention provides a method, and corresponding system and apparatus, for providing a universal automated real-time spatial clustering of electronic data generated from human activity for monitoring events in pre-identified geographic areas. The spatial clusterer operates using all the electronically available information and enables new events, or immediate changes of known events, to be identified in real-time. Hence the spatial clusterer operates as an event processor notifying of new spatially dispersed events in real time which were not known before by anybody, and also enabling the real-time followup of the evolution of known events. In particular, it allows the identification of spontaneously generated not pre-planned events. It also comprises a quality verification identifying anomalous clusters generated erroneously. The application of the spatial clusterer to urban settings results in a more efficient usage of city resources.

**FIG. 3**

EP 2 897 088 A1

**Description**

**TECHNICAL FIELD**

The present invention relates generally to the field of electronic data processing, and in particular, to a method and apparatus for optimum spatial clustering of electronic data.

**BACKGROUND OF THE INVENTION**

Modern urban areas, such as cities, are confronting a number of problems related to the management of city resources. Ever growing cities need to offer adequate services to guarantee the seamless and efficient functioning of the city. Traditionally, city administrations have compiled information manually, by performing polls, and by using statistical information related to the population living in the different neighbourhoods. With this information different services are designed and updated, such as public transport (buses, underground, trains), waste disposal and cleaning systems, city safety and security, traffic management, mobile health services (such as ambulances), or private services such as taxi companies, street sellers, proximity marketing, and the like.

Any kind of event congregating a number of citizens at a particular time in a particular location of the city will affect the whole cities' ability to continue offering the same services with the same service level quality to its citizens. Such events can range from events taking place in well-known social spots, such as sport halls, music halls, theaters, city-center areas, and the like. One-time events can also be organized in public areas. Furthermore, the occurrence of non-planned events is increasing, as people perform spontaneous congregations relating to common interests. With the advent of social networking, organizing and announcing such a spontaneous event, with the immediate followup of thousands of participants, is a reality. Such planned and non-planned events are becoming an increasing problem for the management of city resources.

Hence the need exists to prepare for and cater for events in order to correctly administer city resources in view of the disruption produced to the daily functioning of the city. This task has so far also been performed manually, by compiling information regarding the preparation of events. However this manual compilation is at best erratic. It fully depends on the event organisers informing the city council about planned events. It also depends on different departments within the city administration internally informing their colleagues about events they are planning. At best, during the planning stage, there is only an approximate idea of the impact of an event in terms of the number of participants.

Apart from the incomplete amount of information which can be manually collected, the other major deficiency in these systems is that there are no decisive criteria to help pre-empt the amount of resources which should be exactly assigned to different activities, and the impact of these on the normal working of a city. This has resulted in severe mismanagement decision-making as well as large amounts of resources being wasted through wrong allocation. Furthermore, even the cities with the best manual data compilation systems so far have not been able to resolve the severe problem caused by spontaneous events being organized and executed in a short interval of time. The corresponding unhappiness created to the event participants on one hand, and the affected non-participating citizens, on the other, have negative implications in relation to generalized social stability in large and dense urban environments.

One manner of dealing with this problem has been to analyse the information collected in terms of geographical clusters. With the advent of ubiquitous communications, human activity is partially captured by the digital traces left during our everyday life. Examples of such digital traces related to human activity are phone calls (and the associated base stations), public transportation accesses (also through the ticketing services deployed), credit card transactions (associating a client to the specific location the transaction took place), or geo-enabled social media content (such as pictures, or Twitter messages, or any other event published by the users through their daily activity in social networks on the Internet).

By spatially clustering the data points, or individual items of data information, groups of similar spatial objects are collected into classes, allowing for the summarization of spatial data, and providing an idea of the geographical extent of each class. The spatial summarization of individual data points collected from the information provided yields areas of interest not visible beforehand. It is one objective of the invention to provide a more complete picture of events occurring in a particular environment by associating the digital traces related to human activity (such as phone calls, base stations, access points, public transport stations, ticketing, trade transactions, location-based services, social network events, and the like) into spatial clusters, resulting in the minimization of wasted resources through the optimized deployment and usage of city resources.

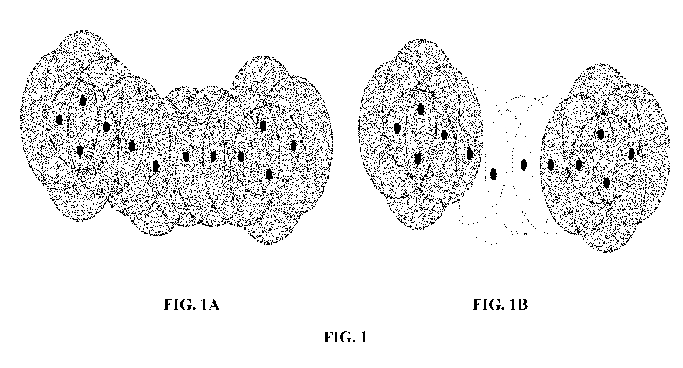

Depending on the particular configuration of parameters used, the same data points may produce different results. **FIG. 1** depicts the results of two such clustering techniques. As can be seen, in FIG. 1A the clustering algorithm results in all data points being considered as part of the same cluster. On the other hand, in FIG. 1B the clustering algorithm results in the determination of two distinct clusters.

One problem identified with spatial clustering is that the manner in which the cluster is determined affects the generated cluster's size, not only in relation to the number of points contained but also the geographical space covered. This in hand affects the useful information which may be derived from such clustering technique. Not any clustering technique provides useful information.

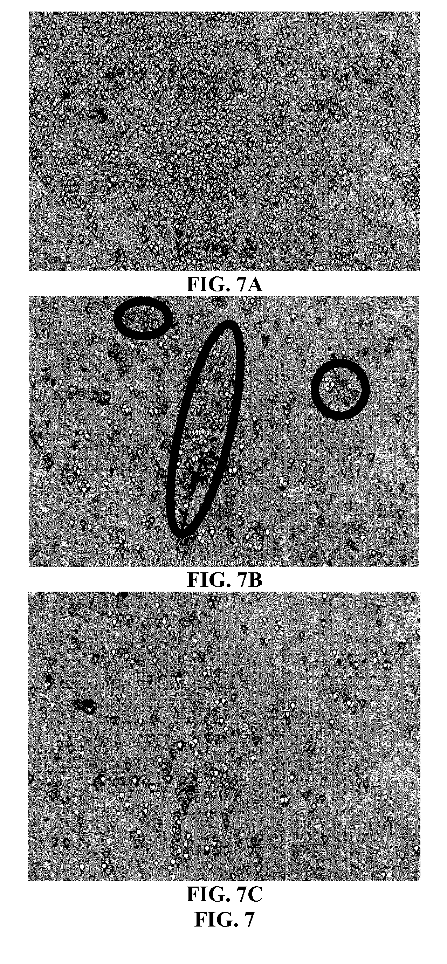

**FIG. 7** depicts a spatial clustering applied with different granularity level to the same set of collected data points. In FIG. 7A the parameters are such that no discrimination into independent clusters is achieved. The result of this broad clustering is a single giant cluster which does not provide any useful information for city resource management and decision-making. In other words, after analysis, the collected data is still chaotic. In FIG. 7B the parameters are such that different clusters can be identified (as represented by the circles) producing information about different clusters of activity in the city. The result of this granular clustering is useful information which can be utilized by the corresponding authorities. In FIG. 7C the granularity level is so detailed that information is simply lost again. The result of this too detailed clustering is similar as the case of broad clustering: information is lost and is of no use to city authorities.

Hence, depending on the clustering algorithm and parameter configuration, a clustering algorithm can yield completely meaningless information. The resolution of this problem normally necessitates human manual intervention to discriminate between useful and useless spatial clusters. This results in a slow process, requiring human intervention, which cannot provide the necessary analysis in real time. Furthermore, the manual collection of data is incomplete, providing only a very limited sample set from which to take decisions from. Also, each data set collected, and the manual analysis thereof, is very much dependent on the characteristics of each area being analysed. The resolution of the problem for one city cannot be transposed to a different city due to the cities' different structure, population, services, financial resources, social dynamics, and the like.

Therefore a need exists to effectively solve the abovementioned problems by providing a universal automated real-time spatial clustering algorithm which maximizes the probability of useful information being provided. The application of this spatial clustering to urban settings results in a more efficient usage of the aforementioned city resources. This automated spatial clustering algorithm should be universal, in the sense that it should work efficiently independently from the urban area which it is analysing, in order to prevent manually fine-tuning the clustering algorithm to each and every different city. Further, it should be self-configuring in order to provide the optimized level of granularity, not too coarse nor too fine, in order to provide clustered information which has a high probability of being useful. It should also operate in real-time in order to detect not only pre-planned events for which some information exists already, but in particular spontaneously generated not pre-planned events which are often the most detrimental due to their surprising nature.

## SUMMARY

It is therefore an object of the present invention to provide solutions to the above mentioned problems. In particular it is the objective of the invention to provide a spatial clustering algorithm which is universal and can be used with minimum initial configuration in any city of the world. It is automated preventing the need for continuous human intervention to manually fine-tune and correct the erred results. It operates in real-time using the latest provided electronic human-related information and therefore is adaptive.

In particular, it is the object of the present invention to provide an apparatus for real-time spatial clustering which achieves the above objectives.

It is another object of the present invention to provide a method for real-time spatial clustering which achieves the above objectives.

It is another object of the present invention to provide a computer readable medium comprising instructions, once executed on a computer, for performing a method for real-time spatial clustering which achieves the above objectives.

It is another object of the present invention to provide a system for real-time spatial clustering which achieves the above objectives.

The invention provides methods and devices that implement various aspects, embodiments, and features of the invention, and are implemented by various means. The various means may comprise, for example, hardware, software, firmware, or a combination thereof, and these techniques may be implemented in any single one, or combination of, the various means.

For a hardware implementation, the various means may comprise processing units implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the various means may comprise modules (for example, procedures, functions, and so on) that perform the functions described herein. The software codes may be stored in a memory unit and executed by a processor. The memory unit may be implemented within the processor or external to the processor.

Various aspects, configurations and embodiments of the invention are described. In particular the invention provides methods, apparatus, systems, processors, program codes, computer readable media, and other apparatuses and elements that implement various aspects, configurations and features of the invention, as described below.

**BRIEF DESCRIPTION OF THE DRAWING(S)**

The features and advantages of the present invention will become more apparent from the detailed description set forth below when taken in conjunction with the drawings in which like reference characters identify corresponding elements in the different drawings. Corresponding elements may also be referenced using different characters.

FIG. 1A and FIG. 1B depict the results of two different spatial clustering techniques.
FIG. 2 depicts a method for spatial clustering according to one embodiment of the invention.
FIG. 3 depicts an apparatus for spatial clustering according to one embodiment of the invention.
FIG. 4 depicts a signaling diagram according to one embodiment of the invention.
FIG. 5 depicts the initial setup phase of the method for spatial clustering.
FIG. 6 depicts the steady state phase of the method for spatial clustering.
FIGs. 7A to 7C depict a spatial clustering algorithm applied with different granularity level to the same set of collected data points.
FIGs. 8A and FIG. 8B depict the results of the spatial clustering applied to two different sets of collected data points at different time instants.
FIG. 9 depicts a system comprising an apparatus for spatial clustering according to one embodiment of the invention.

**DETAILED DESCRIPTION OF THE INVENTION**

In different embodiments of the invention, a spatial clusterer is provided which additionally to traditional data compiling mechanisms, obtains any type of data generated from human-related activity. In this sense, the data generated from data networks is exploited as this data is most readily available electronically and ready to be automatically fetched without human intervention. Such data points are generated passively by users unintentionally, such as their last GPS or cell location, as well as actively as they utilize social networks, such as tweets, or published events, news, or ticks.

Therefore any type of active and passive data is collected as long as it is readily available in electronic format. The usage of mobile payment machines, ticket vending machines, applications when entering theatres, all generate data which can be served to a central database of user-related data. In this manner the data set is increased as long as there is data electronically available, which maximizes the response speed as data is readily available, and changes in human activity are immediately processed. This enables the real time followup of events, making sure even those spontaneously appearing events can be identified and taken into consideration.

The spatial clusterer of the invention also takes into account the administrative divisions particular to each and every different urban setting. For example, such administrative divisions may be the district codes, neighbourhoods, postal codes, or any other division of the urban geography which has been performed by the authorities. It is the realisation of the inventors that administrative divisions of cities comprise inherent knowledge accumulated during decades or centuries regarding that particular urban setting. District codes, or other administrative divisions, relate to geographic divisions following certain historic and demographic developments and evolution. More dense areas and less dense areas, or ones with higher or lower population, represent themselves also in the size and number of administrative divisions. So do the regions which undergo different varying levels of activity periodically, such as business centers or tourist spots.

Due to the use of administrative information as input data into the spatial clustering algorithm, the aforementioned intrinsic information is re-utilised as an aid in generating clusters which are correctly self-configured to the correct granularity level of that city. Hence, by using this parameter as input, the clusterer automatically adapts to the particular urban setting under analysis, providing an adaptive spatial clusterer which is universal and self-configuring. Hence the data analysis and cluster generation produced by the spatial clusterer guarantees useful information being generated as the optimum level of granularity is automatically configured per urban setting.

In the urban sensing scenario, an adequate spatial cluster is assumed to be one that gathers the maximum number human sensed points within a reasonable distance to points of interests. Most cities around the world share a number of common administrative divisions that could be used for such task, such as the neighborhoods, boroughs, or districts of several types, that is, school districts or fire protection districts. The use of such administrative divisions as an input parameter to the spatial clusterer automatically tunes the clusterer algorithm to the particular urban setting being analysed. Moreover, it assures that the clusterer can be transposed to any city in the world. The postal code division is almost universal in terms of usage, but specifically tailored for each city, and fixed administratively.

Therefore the spatial clusterer of the invention operates using all the electronically available information together with the administrative divisions of the urban setting under analysis. In an initial phase the optimal set of clusters are determined using this information. In subsequent iterations wherein the cluster determination is repeated, a real-time followup of the changes between one time instant and the next, together with a comparison with a threshold, allows the occurrence of new events, or immediate changes of known events, to be identified in real-time. Hence the spatial clusterer operates as an event processor notifying of new spatially dispersed events in real time which were not known before by anybody, and also enabling the real-time followup of the evolution of known events. It also allows the identification of anomalous clusters which are not providing a reliable representation of human activity. In other words, false clusters which are erroneously generated are automatically detected.

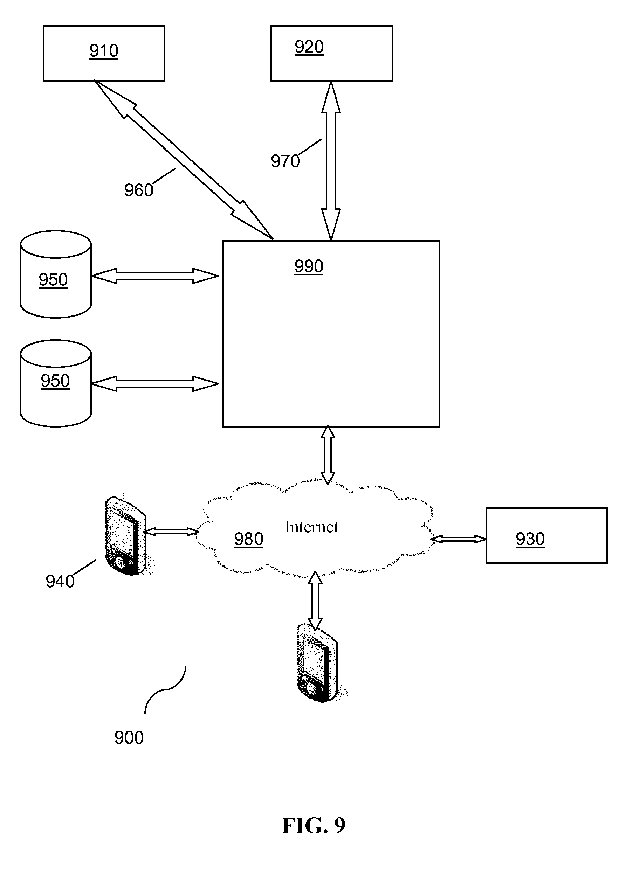

**FIG. 9** depicts a system 900 comprising the spatial clusterer 990 of the invention. The spatial clusterer, or apparatus for spatial clustering, is communicatively coupled to a number of electronic data sources. For example, a public administration's own premises may comprise data servers 910 which provide information regarding administrative information of the urban setting being analysed. These servers may also provide any other type of information readily available and collectable by the administrations, such as census information, or data collected as it services the public through the use of a plurality of data collectors and sensors dispersed around the urban environment. There could be also private data providers 920 providing information collected from their network of sensors and information collectors. Finally, public databases 950 wherein existent information corresponding to human-related activity may be also utilized to gather the maximum amount of information.

Typically the communication links 960, 970, 980 may be open links or virtual private network VPN links. The most commonly utilized open link is the internet providing access to a plurality of servers 930 and clients 940. The interaction of the users of the client devices with social networks generates also electronic data which is transmitted to the spatial clusterer via common wired or wireless communication links. It is within the scope of the skilled artisan to realize the details necessary for implementing such a communication system in order to collect the electronic data generated due to human activity.

As mentioned in the initial phase the spatial clusterer generates at least one spatial cluster of data points. The most basic parameter used to generate a cluster is the distance epsilon $\varepsilon$ that must exist between two consecutive data points for them to belong to the same cluster. In other words, if the data points are close enough, they are considered to be part of the same cluster. Otherwise it is assumed they do not belong to the same cluster.

Therefore all data points separated by a distance smaller or equal to an optimum distance epsilon $\varepsilon$ are assigned to the same cluster. If this epsilon value is very large, the totality of collected data points will be assigned to the same single huge cluster. On the other hand, if this value is very small, the totality of collected data points will be assigned to a large number of very small clusters.

Hence the clusters are generated by initially determining an optimum value of epsilon which takes into account the totality of collected data points. Other parameters, and related functions thereof, are used to construct spatial clusters together with the corresponding parameters which define the cluster:

- $\varepsilon$ (*epsilon*): predefined distance between two data points to include points within the same cluster.

- **Clusterer k:** the instantiation of a specific clustering algorithm with specific configuration parameters and under an original set of total points. Once the clusterer is built, it contains a number of I clusters with N total clustered points. A clusterer k assigns a cluster identifier to every single data point it analyses. All noisy data points are assigned a cluster identifier of -1. This cluster identifier will always be considered for those points that have not been assigned to any cluster, and therefore, considered as noise.

- **Clusterer Efficiency** ($CE_k$): the fraction of points of the original dataset that are not considered noise with respect to the total number of points. In other words, the fraction of clusterized data points with respect to the total number of points provides an indication of the number of data points that the clusterer is using and the number of points that has been considered as noise, thereby correctly calibrating the clusterer k to maximize the number of points used.

- **Cluster Importance** ($CI_i$): per cluster, the number of data points that belong to a single cluster divided by the total clustered points N. This parameter provides a relative indication of the importance of one cluster with respect to another in terms of density of data points.

- **Cluster Homogeneity** ($CH_i$)**:** per cluster, the biggest fraction of the cluster that shares the same administrative division identifier. This indicator provides a measurement of the homogeneity of each individual cluster and therefore a rank of normality with respect to the administrative divisions. The result is, for each cluster, the density of data points which belong to different administrative divisions within the cluster being analysed.

From these parameters, the Upper Quartile Average Clusterer Homogeneity ($UQACHA_k$) is determined as the

average Cluster Homogeneity $CH_i$ of the clusters in the Upper Quartile according to their Cluster Importance ($CI_i$):

$$UQACH_k = \frac{\sum\limits_{CI_i \in UpperQuartile} CH_i}{\left| CI_i \in UpperQuartile \right|} \qquad [1]$$

This expression provides an aggregation of the homogeneity of the most important clusters, providing therefore a raw measurement of anomaly.

To obtain a measure of homogeneity amongst the clusters, the Clusterer Signal-to-Noise Ratio ($CSNR_k$) is determined which is equal to the mean cluster size divided by its standard deviation. This indicator provides an indication of the level usefulness of the information.

The Relative Clustering Index ($RPCCI_k$) is determined as the multiplication of the Clusterer Signal-to-Noise Ratio by the Upper Quartile Average Clusterer Homogeneity and by the Clusterer Efficiency:

$$RPCCI_k = CSNR_k \times UQACH_k \times CE_k \qquad [2]$$

By maximizing this index, similar-sized clusters are obtained with high homogeneity and with a highest number of points clustered. Hence the resulting clusters are not too coarse or too fine. The maximization of the Relative Cluster Index provides the optimum cluster configuration wherein useful information can be extracted therefrom. It also assures the self-configuration of the clusterer without human intervention.

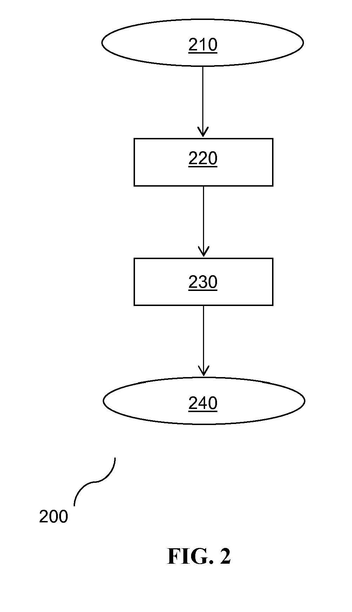

**FIG. 2** depicts a method for spatial clustering according to one embodiment of the invention. The method comprises two main phases: an initial setup phase and a subsequent steady-state operative phase. The method 200 begins, in the initial setup phase, with the collection 210 of all administrative information. In the next step 220, all human-related activity data is collected and a first spatial clustering is determined resulting in at least one cluster being generated for the urban setting under analysis.

In the second steady-state operative phase, the generated at least one cluster together with its associated parameters are utilized for a real-time event followup 230. Hence the human-related activity data is updated, or in other words, latest information is fetched again. This information is used to determine whether the changes from the last iteration are above a threshold or not. The at least one cluster parameters are re-calculated and the result is sent for visualization 240. The visualization comprises a real-time followup of the changes in clusters.

In another aspect the visualization comprises an alarm indicating an unexpected activity in the clusters. In case the rate of change of cluster parameters, such as area or density, is too high, a visual or audible alarm is generated in order to notify the user of the clusterer apparatus about this condition. This also enables the identification of an anomalous cluster. Anomalous clusters are determined to be those whose parameters are far removed from the average values of remaining clusters and do not relate to unexpected events.

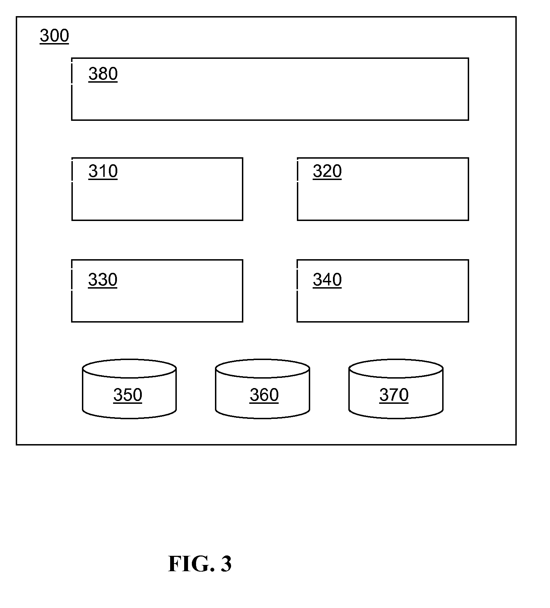

**FIG. 3** depicts an apparatus for spatial clustering according to one embodiment of the invention. The apparatus 300 comprises an administrative information collector 310, a human-related activity data collector 320, a parameter processor 330, an event processor 340, a database for storing the administrative information 350, a database for storing the human-related activity data 360, a memory 370 for storing parameters and intermediate data used during processing, and a communications layer 380.

The administrative information collector 310, or means for collecting administrative information, is a module which crawls networks belonging to different information providers in search of all types of administrative information which classify urban settings into geographic zones. As mentioned, this type of information comprises city's postal codes, district codes, neighbourhood codes, together with the related geographic mappings into areas together with their localization coordinates and sizes. The information provider's networks may be facilitated by access to the city council's own network of information in every urban setting, or an Internet search for relevant information. The skilled artisan will understand that other types of administrative divisions exist in different countries, and these are also collected and utilized, as long as they provide a geographic division of the setting to be analysed. The information collected is stored in memory 250, or means for storing administrative information.

The human-related activity data collector 320, or means for collecting data, is a module which crawls all available communication networks in search of all types of electronic data which is related to human activity. As mentioned, this type of information comprises meta-information about a location they refer to, for example, geopositioned social media content (like tweets or foursquare check-ins), news (associated to the location where they happen), event related information (such as fires, traffic accidents, or metro breakdowns) and other type of census data (such as population distributions per age, and the like). The meta-information also comprises a timestamp with the time instant of the event the data item is referring to.

The communication networks may be facilitated by the city council's own network of communication with urban buildings, structures, stations, and the like, in every urban setting, or an Internet search for relevant information in public databases or publicly available posts performed in social networks. The skilled artisan will understand that other types of event electronic data exist, and these are also collected and utilized, as long as they are electronically accessible and provide an indication of human activity. The information collected is stored in memory 260, or means for storing human-related data.

The parameter processor 330, or means for parameter processing, is a module which is applied to a particular urban setting and executes the spatial clustering algorithm of the invention using, at least, the data gathered by the administrative information collector and the human-related activity data collector which are relevant to that urban setting in particular. The result of the parameter processing is at least one spatial cluster of data points, together with the corresponding parameters which define the cluster, such as location coordinates, size, optimum distance $\varepsilon$ between two cluster data points, or number of data points within the cluster. Although it is possible that the parameter processor produces only one cluster, more often, due to the size and number of activities occurring in modern urban settings, a plurality of clusters are produced which are spatially dispersed. The generation of only one cluster is not necessarily indicative of an anomalous cluster as long as its size and density do not correspond to a single huge cluster covering the whole area of the analysed setting.

The event processor 340, or means for events processing, is a module which performs iterations of the spatial clustering algorithm however with newly fetched data from, at least, the data gathered by the administrative information collector and the human-related activity data collector. However the event processor re-iterates the algorithm this time for each previously identified, or generated, cluster/s. Hence a much smaller volume of data points are analysed resulting in a much speedier response time.

The result of event processing is the continuous real-time updating of cluster parameters. As the human activity develops, either increasing or decreasing, the event processor generates corresponding changes in the spatial clusters. This allows for the followup of new clusters, the updating of existing ones, and the realisation that existing ones have disappeared, as human activity in the urban settings changes.

In one aspect of the invention, the event processor is configured to make a comparison of certain parameters with a threshold to return a boolean value indicating the existence of an unexpected event or of an anomalous cluster. For example, in every iteration the event processor compares the area of each cluster with an area threshold in order to determine whether there is an excessively large cluster being generated. Another example is the comparison of the density of data points with a density threshold. In case the density increases over a short time interval, this could indicate a condition relating to the existence of an unexpected event. This in turn leads to the generation of an alarm in order to alert the authorities of unusual activity in that cluster.

As mentioned, the event processor is configured to make a comparison of certain parameters with a threshold to return a boolean value indicating the existence of an anomaly. The anomaly detector represents a quality check, or feedbacking mechanism, in which the result of the spatial clusterer is verified to try to identify clusters which have a high probability of being erroneously generated by the automatic spatial clustering algorithm.

The communications layer 380 embodies the components responsible for handling the interactions between the apparatus 300 and the external world. The nature of the supported functionalities requires of synchronous and asynchronous communications triggered both from the apparatus as well as from the external servers it is networked with. The skilled artisan will understand that any communication interface may be used as long as it enables the interaction of control information with external servers to collect the relevant information and electronic data. A uniform and standard-based interface supporting the exploitation from multiple environments and a layered component structure to benefit decoupling and scalability is the preferred implementation. Memory 370, or means for storing parameters, stores all intermediate and final parameters related to the generated clusters.

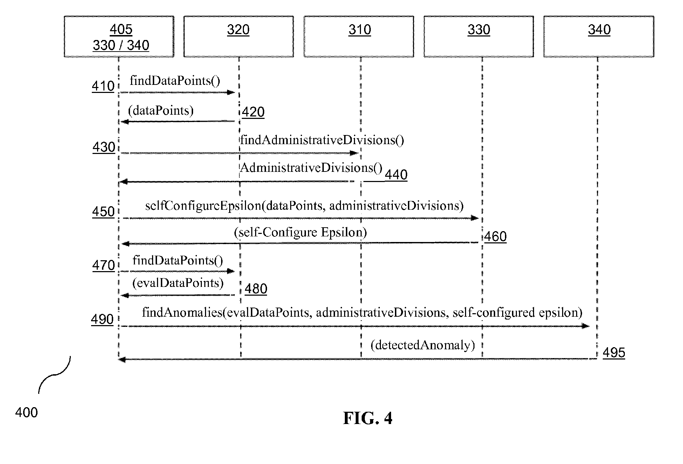

FIG. 4 depicts a signaling diagram corresponding to the method 200 for spatial clustering as performed by the components of the apparatus 300. As can be seen the signaling diagram has a first block representing a central processor 405 controlling the actions to be performed by the different modules of the spatial clustering apparatus. The skilled artisan will understand that the spatial clustering apparatus could comprise additionally to the parameter processor and event processor a central processor 405 to independently coordinate all actions to be performed by the different modules. However, it is also possible that the spatial clustering apparatus does not utilize a separate central processor, and it is the parameter processor 330 which controls the signal flow in the initial setup phase and the event processor 340 which controls the signal flow in the subsequent stead-state operation phase.

The signaling flow begins in step 410 by transmitting a request to the external networks for human-related event data. In step 420 the corresponding information is received and stored. Next, the administrative information is requested 430 and stored after receiving 440 the corresponding administrative divisions corresponding to the urban scenario under consideration. In steps 450-460 the parameter processor utilizes at least this information to determine and generate the one or more clusters from the data set, as well as the associated parameters. One of the most relevant parameters is the distance epsilon ε between two data points belonging to the same cluster. This parameter defines the size of the cluster and defines which data points will belong to the same cluster. Data points whose distance exceeds this minimum level are excluded from the cluster. The parameter processor performs this task automatically and hence the clusters, and related parameters, are self-configured with the optimum granularity. At the end of this initial setup phase 410 - 460 the optimum clusters are defined.

In the subsequent operative phase 470 - 495, the generated clusters are monitored for real-time activity as well as unexpected activity. In step 470 a new request for human-related event data is transmitted. In step 480 the corresponding information is received and stored. This updated data set is used together with the cluster information of the previous phase to perform a live monitoring of the spatial clusters. In one aspect, unexpected human activity is determined 490 and reported 495 for its subsequent notification or visualization to the users of the spatial clusterer.

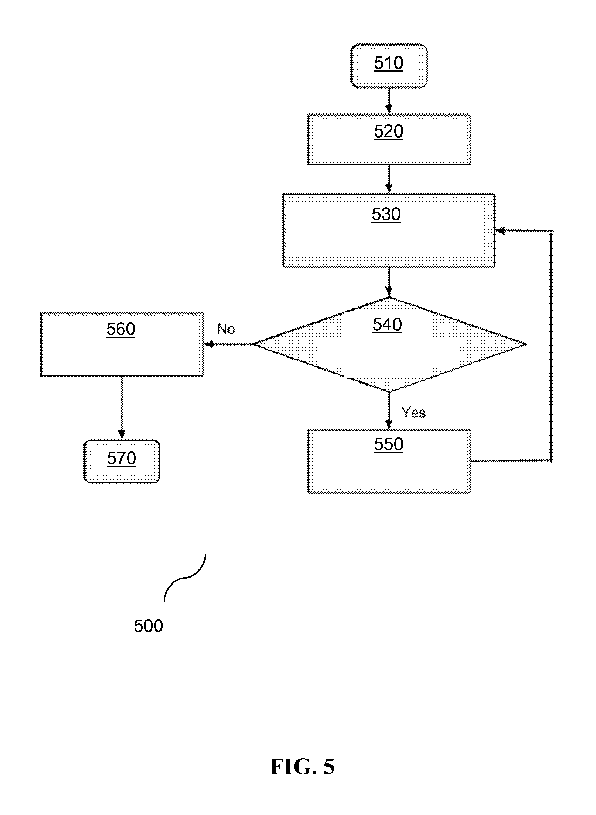

FIG. 5 depicts more details of the initial setup phase 220 of the method 200 for spatial clustering of the embodiment of FIG. 2. As already mentioned, this algorithm uses at least two different inputs which are collected in step 510: the coordinates dataset to be evaluated by the clustering algorithm, and the existing administrative divisions. Before the optimum value for epsilon ε can be determined, the algorithm is initialized 520 with a temporary initial value. The initial value for epsilon ε is set as the average distance between the centroids of each pair of consecutive administrative divisions. Therefore, in case the postal codes are used, the center of all postal code areas is identified, the distances between all centers is determined, and the average distance is calculated and set as a starting point for the parameter epsilon ε. This initialization is followed by calculating an updated value for epsilon ε as the previous value reduced by 20% (or in other words, multiplied by a factor of 0.8).

In step 530 the Relative Clustering Index RPCCI for both values of epsilon ε are determined: the previous value and the current value reduced by 20%. In step 540 the initial value of RPCCI is compared to the current value of RPCCI. If the Relative Clustering Index for the initial epsilon is smaller than for the current one, the algorithm proceeds to step 550 where both values are epsilon ε are reduced again by another 20%. The steps 530 and 540 are iteratively repeated until the comparison of step 550 is negative.

The comparison of step 550 is negative once the Relative Clustering Index RPCCI for the initial epsilon is larger or equal to the RPCCI corresponding to the current epsilon, the optimum level of granularity has been attained as the epsilon value corresponding to the maximum of the Relative Clustering Index function is determined. This value for epsilon ε is determined 560 as the optimum value and it is stored 570 for subsequent operation. Subsequently at least one cluster of data points is generated as all data points separated by a distance smaller or equal to this optimum distance epsilon ε are assigned to the same cluster.

The method steps of the initial phase outputting the optimum cluster parameter epsilon ε can be implemented in software using the following pseudo-code:

```
Initial Epsilon = Average Distance between the centroids of each
pair of consecutive administrative divisions
Evaluating Epsilon = Initial Epsilon * 0.8
C_Init = Clusterer(DBScan, Initial Epsilon, Dataset);
C_Eval = Clusterer(DBScan, Evaluating Epsilon, Dataset);
while (RPCCI (C_Init)< RPCCI (C_Eval)) {
    Initial Epsilon = Evaluating Epsilon
    C_Init = C_Eval
    RPCCI (C_Init) = RPCCI (C_Eval)
    Evaluating Epsilon = Initial Epsilon * 0.8
    C_Eval = Clusterer(DBScan, Evaluating Epsilon, Dataset);
 }
return Evaluating Epsilon, RPCCI (C_Eval).
```

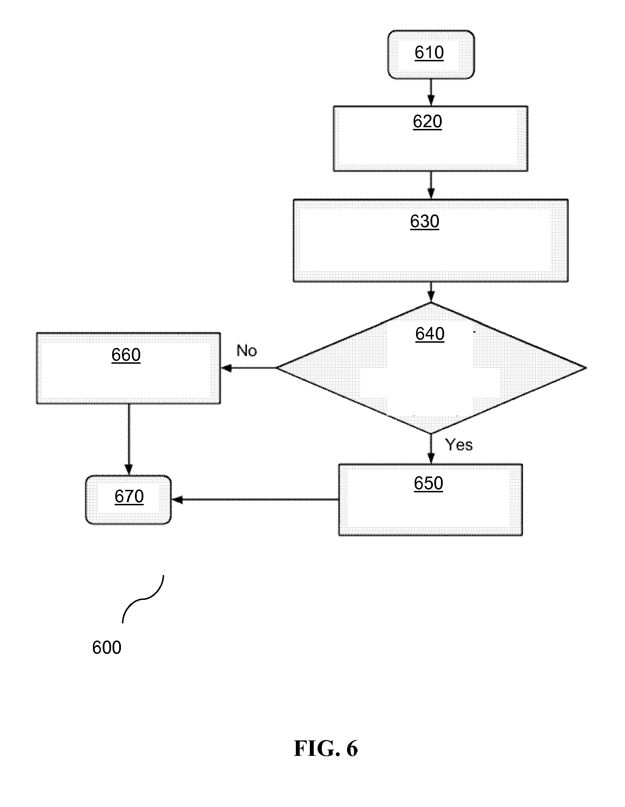

FIG. 6 depicts more details of the operative phase 230 of the method 200 for spatial clustering of the embodiment of FIG. 2. This algorithm uses at least three different inputs which are collected in step 610: the evaluation interval (the frequency to perform the iterative real-time monitoring expressed in units of time, such as minutes), the self-configured parameters obtained from the last iterative step (in particular the optimum epsilon ε value), and an update of all electronic data related to human activity.

The algorithm is iteratively triggered by the system clock every time at the expiry of the evaluation time interval.

Once triggered, the dataset containing the coordinates from the last frequency cycle are recovered 620. In step 630 the Relative Clustering Index RPCCI for both values of epsilon ε are determined: the previous value and the current value reduced by 20%. In step 640 the previous value of RPCCI is compared to the current value of RPCCI. If the Relative Clustering Index for the previous epsilon is smaller than for the current one, the algorithm proceeds to step 650 where an anomalous cluster, or unexpected event, is detected and notified for visualization. Otherwise, in step 660 no anomalous cluster has been detected and the last values of the cluster parameters are notified for visualization. At the end of the iteration, in step 670 it is determined whether the process should continue, for which a new iteration is begun at step 610 again.

The method steps of the steady-state operative phase enabling a real-time monitoring of human activity can be implemented in software using the following pseudo-code:

```
while (true) {
    Initial Epsilon = Self-Configured Epsilon
    Evaluating Epsilon = Initial Epsilon * 0.8
    Timestamp_begin = Current Timestamp - Evaluation Frequency
    Timestamp_end = Current Timestamp
    Dataset = RecoverDataset (Datasource, Timestamp_begin,
    Timestamp_end)
    C_Init = Clusterer(DBScan, Initial Epsilon, Dataset);
    C_Eval = Clusterer(DBScan, Evaluating Epsilon, Dataset);
    if (RPCCI (C_Init) < RPCCI (C_Eval)) {
       return TRUE;
    }
    else{
       return FALSE;
    }
    sleep(Evaluation Frequency)
}.
```

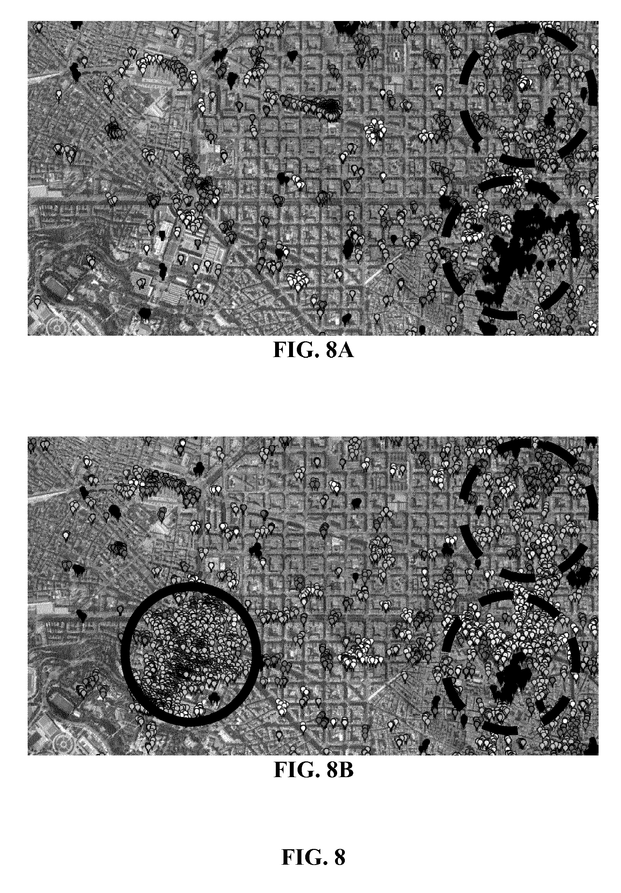

**FIG. 8** depicts the spatial clusterer in operation as applied to an urban environment. FIG. 8A depicts a snapshot of the real-time monitoring of clusters (highlighted by the dotted circle) indicating standard human activity in the city. FIG. 8B depicts the city only a short time after the snapshot of FIG. 8A, where a new cluster (highlighted by the solid circle on the left) has been identified as unexpected heavy human activity appears in a different area of the city.

Hence the spatial clusterer of the invention on one hand enables the automated self-adaptation of the configuration parameters that determine the behaviour of spatial clustering algorithms, profiting from the knowledge intrinsic to existing administrative divisions. The correct and automated configuration of these algorithms are optimized profiting from existing administrative divisions ensuring the effectiveness of the algorithm to provide useful information. On the other hand the application of the developed method for the automated identification of spatially dispersed events, providing cues about the impact with respect to the expected behaviour.

Although the above description and embodiments have been described with respect to an urban setting, the skilled artisan understands that the features and embodiments describing the invention are equally applicable to any other scenarios or settings which are not necessarily urban, such as sub-urban, rural, country-side, and the like. The features of the invention can be applied to any setting wherein human activity is dynamic and its changes and evolution can be monitored via the compilation of electronic and automatically generated data.

It is to be understood that the embodiments, realisations, and aspects described herein may be implemented by various means in hardware, software, firmware, middleware, microcode, or any combination thereof. Various aspects or features described herein may be implemented, on one hand, as a method or process or function, and on the other hand as an apparatus, a device, a system, or computer program accessible from any computer-readable device, carrier, or media. The methods or algorithms described may be embodied directly in hardware, in a software module executed by a processor, or a combination of the two.

It is to be understood by the skilled person in the art that the various embodiments, realisations, and aspects of the invention have been so drafted with the aim of disclosing the invention in a concise manner. This does not mean that the intention is of limiting the scope of the disclosure to the precise combination of embodiments, realisations, and aspects as drafted. On the other hand, the intention is that the different features of the inventive concepts described may be readily understood to be combinable as would be derived from a direct and objective reading of the disclosure by one of ordinary skill in the art. What has been described above includes examples of one or more embodiments. It is, of course, not possible to describe every conceivable combination, or permutation, of components and/or methodologies for purposes of describing the aforementioned embodiments. However one of ordinary skill in the art will recognize that many further combinations and permutations of various embodiments are possible within the general inventive concept derivable from a direct and objective reading of the present disclosure. Accordingly, it is intended to embrace all such alterations, modifications and variations that fall within scope of the appended claims.

**Claims**

1. An apparatus for spatial clustering of electronic data in a system comprising a plurality of electronic data collectors coupled via communication links to the apparatus, the apparatus comprising:

   means for collecting electronic data generated from human activity occurring within a particular geographic zone;
   means for collecting administrative information relating to physical divisions of the geographic zone;
   means for parameter processing configured for generating at least one cluster of activity based on the collected electronic data and the administrative information by determining the optimum value for the distance epsilon $\varepsilon$ between two data points and assigning all data points separated by a distance smaller or equal to this optimum distance to the same cluster;
   means for event processing configured for continuously monitoring the changes in the at least one cluster's activity and for continuously detecting anomalous clusters, wherein the monitoring and detecting are based on the optimum value for epsilon $\varepsilon$;
   means for generating an alarm once an anomalous cluster is detected; and
   means for visualizing the changes in cluster activity as well as anomalous clusters.

2. The apparatus of claim 1, wherein the electronic data collected comprises digital information time-stamped and location-coded corresponding to at least one of phone calls, base stations, access points, public transport stations, ticketing, commercial transactions, location-based services, geo-localised social media content, published events, and Twitter events, and the like.

3. The apparatus of claim 2, wherein the administrative information comprises codes and geographical coordinates corresponding to at least one of postal codes, districts, neighbourhoods, boroughs, school districts, fire protection districts, and the like.

4. The apparatus of claim 2, wherein the means for parameter processing is further configured to determine a cluster efficiency parameter as the fraction of the total data points which are assigned to all clusters to the total number of collected data points.

5. The apparatus of claim 2, wherein the means for parameter processing is further configured to determine a cluster importance parameter per cluster as the fraction of the total data points which are assigned to a specific cluster to the total number of data points assigned to all clusters.

6. The apparatus of claim 2, wherein the means for parameter processing is further configured to determine a cluster homogeneity parameter per cluster as the fraction of the total data points which are assigned to a specific cluster corresponding to a particular administrative division to the total number of data points of that cluster.

7. The apparatus of claim 6, wherein the means for parameter processing is further configured to determine an upper quartile average cluster homogeneity parameter as the fraction of the sum of all cluster homogeneity parameters in the upper quartile to the sum of all cluster importance parameters in the upper quartile.

8. The apparatus of claim 2, wherein the means for parameter processing is further configured to determine cluster signal-to-noise ratio parameter as the mean cluster size divided by its standard deviation.

9. The apparatus of claim 7, wherein the means for parameter processing comprises means for generating the at least one cluster by determining a relative clustering index as the multiplication of three parameters: the cluster signal-to-noise ratio parameter, the upper quartile average cluster homogeneity parameter, and the cluster efficiency parameter.

10. The apparatus of claim 2, wherein the means for parameter processing comprises means for generating the at least one cluster by setting an initial value for epsilon $\varepsilon$ as the average all of the distances between the centroids of pairs of consecutive administrative divisions.

**11.** The apparatus of claim 2, wherein the means for parameter processing comprises means for generating the at least one cluster by:

determining a first relative clustering index using a first initial epsilon ε value;
determining a second relative clustering index using a second epsilon ε value corresponding to the previous value multiplied by a factor of 0.8;
comparing the first relative clustering index to the second relative clustering index;
determining that the second value for epsilon ε is the optimum epsilon ε value in case the first relative clustering index is smaller than the second relative clustering index; and
multiplying both epsilon values by a factor of 0.8 and recalculating the first and second relative clustering indexes in case the first relative clustering index is larger or equal to the second relative clustering index before comparing and determining again whether the epsilon value is optimum or not.

**12.** The apparatus of claim 2, wherein the means for event processing is configured for detecting anomalous activity by:

instructing the means for collecting electronic data to collect a new data set after the lapsing of a predetermined evaluation time interval;
determining a third relative clustering index using the optimum epsilon ε value;
determining a fourth relative clustering index using a third epsilon ε value corresponding to the optimum value multiplied by a factor of 0.8;
comparing the third relative clustering index to the fourth relative clustering index;
determining that there is an anomalous condition in case the third relative clustering index is smaller than the fourth relative clustering index;
wherein the anomalous condition or activity comprises an unexpected event or an erroneously generated cluster.

**13.** The apparatus of claim 2, further comprising means for detecting unexpected cluster activity by comparing at least one value of at least one parameter with a threshold and determining an unexpected activity has occurred if the at least one parameter value exceeds the threshold, wherein the at least one parameter comprises epsilon ε, the cluster efficiency, the cluster importance, the cluster homogeneity, the cluster signal-to-noise ratio, the density of data points within a single cluster, or a rate of change of any of these parameters.

**14.** A system for spatial clustering of electronic data, the system comprising a plurality of electronic data collectors coupled via communication links to an apparatus according to any one of claims 1 to 13.

**15.** A method in an apparatus for spatial clustering of electronic data in a system comprising a plurality of electronic data collectors coupled via communication links to the apparatus, the method comprising:

collecting electronic data generated from human activity occurring within a particular geographic zone;
collecting administrative information relating to physical divisions of the geographic zone;
generating at least one cluster of activity based on the collected electronic data and the administrative information by determining the optimum value for the distance epsilon ε between two data points and assigning all data points separated by a distance smaller or equal to this optimum distance to the same cluster;
continuously monitoring the changes in the at least one cluster's activity and continuously detecting anomalous clusters, wherein the monitoring and detecting are based on the optimum value for epsilon ε;
generating an alarm once an anomalous cluster is detected; and
visualizing the changes in cluster activity as well as anomalous clusters.

**16.** A computer readable medium comprising instructions for performing the method steps of claim 15 once executed on a computer.

**FIG. 1A**              **FIG. 1B**

**FIG. 1**

FIG. 2

300

380

310

320

330

340

350

360

370

**FIG. 3**

FIG. 4

**FIG. 5**

```
                          ┌─────────┐
                          │   610   │
                          └────┬────┘
                               │
                               ▼
                     ┌───────────────────┐
                     │        620        │
                     └─────────┬─────────┘
                               │
                               ▼
              ┌──────────────────────────────┐
              │             630              │
              └──────────────┬───────────────┘
                             │
                             ▼
                           ◆ 640 ◆
        ┌────────┐  No    ◆         ◆
        │  660   │◄───────◆         ◆
        └───┬────┘         ◆       ◆
            │                  │ Yes
            │                  ▼
            │            ┌───────────┐
            ▼            │    650    │
        ┌───────┐        └─────┬─────┘
        │  670  │◄─────────────┘
        └───────┘
```

600

**FIG. 6**

**FIG. 7A**

**FIG. 7B**

**FIG. 7C**

**FIG. 7**

**FIG. 8A**

**FIG. 8B**

**FIG. 8**

**FIG. 9**

| | Europäisches Patentamt European Patent Office Office européen des brevets | **EUROPEAN SEARCH REPORT** | Application Number EP 14 15 1383 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-16 | INV. G06Q10/06 G06Q50/26 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 24 April 2014 | Guenov, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 14 15 1383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. * ----- | | |

TECHNICAL FIELDS
SEARCHED        (IPC)

The present search report has been drawn up for all claims

| Place of search | Date of completion of the search | Examiner |
|---|---|---|
| The Hague | 24 April 2014 | Guenov, Mihail |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)